# EUROPEAN PATENT APPLICATION

(11) **EP 4 851 474 A1**
(43) Date of publication of application: **09.12.2026**
(21) Application number: 26178368.2
(22) Date of filing: 12.05.2026
(51) Int. Cl.: F16D 27/102, F16D 27/01

(54) **SHAFT DISCONNECTION SYSTEM AND METHOD**

(30) Priority: 03.06.2025 US 202519226695
(71) Applicant: General Electric Company, Cincinnati, Ohio 45215 (US)
(72) Inventor: BHARGAV, Tanmai, 560066 Bengaluru (IN); GANIGER, Ravindra Shankar, 560066 Bengaluru (IN); DHAR, Sandeep, 560066 Bengaluru (IN); RAKWAL, Dinesh, 560066 Bengaluru (IN); MATH, Souvik, 560066 Bengaluru (IN); ISAZA, Fabian, Evendale, 45241 (US)
(74) Representative: Openshaw & Co.

(57) **Abstract**

A shaft disconnection system (400) includes first shaft (360) interconnected with a gearbox (352), and a second shaft (362) interconnected with an electric machine (354). An interface element (440) transfers torque between the first and second shafts (360, 362) and is movable from a first position in which the first and second shafts (360, 362) are engaged with respect to each other to a second position in which the first and second shafts (360, 362) are disengaged with respect to each other. An electromagnet (460) is positioned radially outward of the first and second shafts (360, 362) and axially aligned with the interface element (440). Actuation of the electromagnet (460) causes the interface element (440) to move from the first position to the second position to disengage the first and second shafts (360, 362).

## Description

### TECHNICAL FIELD

The present subject matter relates generally to a shaft disconnection system and method.

### BACKGROUND

An aircraft engine, such as a gas turbine engine, may include electric machines which generate electricity used by an aircraft during operation. The electric machine may be driven by a drive shaft which is connected, directly or indirectly (e.g. via a gearbox), to a turbomachine of the gas turbine engine. As with any mechanical system, anomalies may occur during operation of the gas turbine engine where it is advantageous or necessary to mechanically decouple the electric machine from a driving or driven device (e.g., a gearbox).

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic top view of an aircraft having a hybrid-electric propulsion system according to various exemplary embodiments of the present disclosure.
FIG. 2 is a schematic cross-sectional view of one of the hybrid-electric-capable propulsors of the aircraft of FIG. 1.
FIG. 3 is a schematic view of a portion of a torque transfer assembly in accordance with an embodiment of the present disclosure accordance.
FIG. 4A is a schematic, section, side view of an exemplary embodiment of the shaft disconnection system in accordance with the present disclosure depicting a connected state of two shafts.
FIG. 4B is a schematic, section, side view of the exemplary embodiment of the shaft disconnection system of FIG. 4A in accordance with the present disclosure depicting a disconnected state of two shafts.
FIG. 5A is a schematic, section view of a portion of the exemplary embodiment of the shaft disconnection system of FIG. 4A in accordance with the present disclosure taken along the line 5A-5A of FIG. 4A.
FIG. 5B is a schematic, section view of a portion of the exemplary embodiment of the shaft disconnection system of FIG. 4B in accordance with the present disclosure taken along the line 5B-5B of FIG. 4B.
FIGS. 6A-6C are schematic views of different exemplary embodiments of an interface element that
   be used in the shaft disconnection system depicted in FIGS. 4A, 4B, 5A, and 5B in accordance with the present disclosure.
FIG. 7A is a schematic, section, enlarged, side view of an exemplary embodiment of a locking mechanism of the shaft disconnection system depicted in a disengaged state in accordance with the present disclosure.
FIG. 7B is a schematic, section, enlarged, side view of an exemplary embodiment of the locking mechanism of the shaft disconnection system of FIG. 7A depicted in an engaged state in accordance with the present disclosure.
FIG. 8 is a flow diagram of an exemplary method of forming an exemplary ceramic matrix composite component in accordance with an embodiment of the present disclosure.
FIG. 9 provides an example computing system according to example embodiments of the present disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The following description is provided to enable those skilled in the art to make and use the described embodiments contemplated for carrying out the disclosure. Various modifications, equivalents, variations, and alternatives, however, will remain readily apparent to those skilled in the art. Any and all such modifications, variations, equivalents, and alternatives are intended to fall within the scope of the present disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the drawing figures. However, it is to be understood that the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

The terms "coupled," "fixed," "attached to," and the like refer to both direct coupling, fixing, or attaching, as well as indirect coupling, fixing, or attaching through one or more intermediate components or features, unless otherwise specified herein.

The term "proximate" refers to being closer to one end than an opposite end. For example, when used in conjunction with first and second ends; high pressure and low pressure sides; or the like, the phrase "proximate the first end," or "proximate the high pressure side," refers to a location closer to the first end than the second end, or closer to the high pressure side than the low pressure side, respectively.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

A "third stream" as used herein means a non-primary air stream capable of increasing fluid energy to produce a minority of total propulsion system thrust. The third stream may generally receive inlet air (air from a ducted passage downstream of a primary fan) instead of freestream air (as the primary fan would). A pressure ratio of the third stream may be higher than that of the primary propulsion stream (e.g., a bypass or propeller driven propulsion stream). The thrust may be produced through a dedicated nozzle or through mixing of an airflow through the third stream with a primary propulsion stream or a core air stream, e.g., into a common nozzle.

In certain exemplary embodiments, an operating temperature of the airflow through the third stream may be less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments, these operating temperatures may facilitate heat transfer to or from the airflow through the third stream and a separate fluid stream. Further, in certain exemplary embodiments, the airflow through the third stream may contribute less than 50% of the total engine thrust (and at least, e.g., 2% of the total engine thrust) at a takeoff condition, or more particularly while operating at a rated takeoff power at sea level, static flight speed, 86 degree Fahrenheit ambient temperature operating conditions.

Furthermore in certain exemplary embodiments, aspects of the airflow through the third stream (e.g., airstream, mixing, or exhaust properties), and thereby the aforementioned exemplary percent contribution to total thrust, may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

Electric machines with varied power ratings (e.g., a low pressure (LP) electric machine rotatable with an LP system and/or a high pressure (HP) electric machine rotatable with an HP system) may be integrated in the gas turbine engine. The LP and HP electric machines, including the power electronics assemblies electrically connected to the LP and HP electric machines, convert and distribute power to the various components of the gas turbine engine or aircraft.

The present disclosure provides a shaft disconnection system that may be reset and used for repeated connection and disconnection of torque-based devices. In exemplary embodiments, the shaft disconnection system is self-powered and/or self-actuating based on electrical energy generated via one or more rotating shafts of the torque-producing devices. In exemplary embodiments, at least one magnet connected to or mounted on at least one rotating shaft is used to induce an electromagnetic force (EMF) in a coil positioned radially outward from the rotating shaft. One or more capacitors, in exemplary embodiments, one or more supercapacitors, may be connected to the coil to store the electrical energy generated in the coil. The stored energy may be used to actuate the shaft disconnection system and disengage connected shafts. The stored energy may also be used to re-engage or connect the respective shafts. Thus, embodiments of the shaft disconnection system of the present disclosure are not reliant on an independent or separate power source apart from the electrical energy generated by a rotation of the connected torque-based devices. Additionally, embodiments of the present disclosure may include one or more torque-transferring interface elements connecting the shafts of the torque-based devices that may be retracted to disconnect the shafts without requiring axial movement of the interface elements. In exemplary embodiments, one or more electromagnets are energized to retract the one or more torque-transferring interface elements to disengage the shafts. The electromagnets may be energized based on electrical energy generated by at least one of the rotating shafts such as, by way of non-limiting example, as described above. The one or more torque-transferring interface elements may be selectively returned to an extended position to reconnect the shafts.

Further, in exemplary embodiments, the shafts may also be reconnected at a non-zero rotational speeds. In exemplary embodiments, at least one shaft may be controlled to synchronize its rotational speed to a shaft to which it is to be connected, at which time the shaft disconnection system may be used to reconnect the shafts. Further, in exemplary embodiments, the shaft disconnection system may be actuated to disconnect shafts based on a rotational speed of at least one of the shafts nearing, meeting, or exceeding a threshold rotational speed. Thus, embodiments of the present disclosure may be used to prevent potential damage to a device from excessive rotation speeds of a driving or driven shaft.

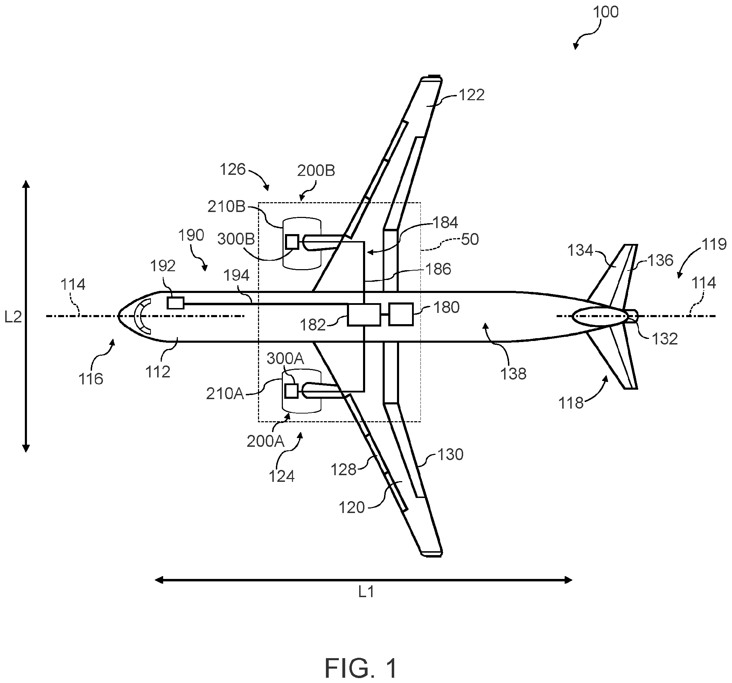

Referring now to the drawings, wherein identical numerals indicate the same elements throughout the figures, FIG. 1 provides a schematic top view of an exemplary aircraft 100 as may incorporate one or more inventive aspects of the present disclosure. As shown in FIG. 1, for reference, the aircraft 100 defines a longitudinal direction L1 and a lateral direction L2. The lateral direction L2 is perpendicular to the longitudinal direction L1. The aircraft 100 also defines a longitudinal centerline 114 that extends therethrough along the longitudinal direction L1. The aircraft 100 extends between a forward end 116 and an aft end 118, e.g., along the longitudinal direction L1.

As depicted, the aircraft 100 includes a fuselage 112 that extends longitudinally from the forward end 116 of the aircraft 100 to the aft end 118 of the aircraft 100. The aircraft 100 also includes an empennage 119 at the aft end 118 of the aircraft 100. In addition, the aircraft 100 includes a wing assembly including a first, port side wing 120 and a second, starboard side wing 122. The first and second wings 120, 122 each extend laterally outward with respect to the longitudinal centerline 114. The first wing 120 and a portion of the fuselage 112 together define a first side 124 of the aircraft 100 and the second wing 122 and another portion of the fuselage 112 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100.

The aircraft 100 includes various control surfaces. For the embodiment shown in FIG. 1, each wing 120, 122 includes one or more leading edge flaps 128 and one or more trailing edge flaps 130. The aircraft 100 further includes, or more specifically, the empennage 119 of the aircraft 100 includes a vertical stabilizer 132 having a rudder flap (not shown) for yaw control and a pair of horizontal stabilizers 134 each having an elevator flap 136 for pitch control. The fuselage 112 additionally includes an outer surface or skin 138. It should be appreciated that in other exemplary embodiments of the present disclosure, the aircraft 100 may additionally or alternatively include any other suitable configuration. For example, in other embodiments, the aircraft 100 may include any other control surface configuration.

The exemplary aircraft 100 of FIG. 1 also includes a hybrid-electric propulsion system 150. For this embodiment, the hybrid-electric propulsion system 150 has a first propulsor 200A and a second propulsor 200B both operable to produce thrust. The first propulsor 200A is mounted to the first wing 120 and the second propulsor 200B is mounted to the second wing 122. Moreover, for the embodiment depicted, the first propulsor 200A and second propulsor 200B are each configured in an underwing-mounted configuration. However, in other example embodiments, one or both of the first and second propulsors 200A, 200B may be mounted at any other suitable location in other exemplary embodiments.

The first propulsor 200A includes a gas turbine engine 210A and one or more electric machines, such as electric machine 300A mechanically coupled with the gas turbine engine 210A. The electric machine 300A can be an electric generator, an electric motor, or a combination generator/motor. For this example embodiment, the electric machine 300A is a combination generator/motor. In this manner, when operating as an electric generator, the electric machine 300A can generate electrical power when driven by the gas turbine engine 210A. When operating as an electric motor, the electric machine 300A can drive or motor the gas turbine engine 210A.

Likewise, the second propulsor 200B includes a gas turbine engine 210B and one or more electric machines, such as electric machine 300B mechanically coupled with the gas turbine engine 210B. The electric machine 300B can be an electric generator, an electric motor, or a combination generator/motor. For this example embodiment, the electric machine 300B is a combination generator/motor. In this manner, when operating as an electric generator, the electric machine 300B can generate electrical power when driven by the gas turbine engine 210B. When operating as an electric motor, the electric machine 300B can drive or motor a spool of the gas turbine engine 210B. Electric machine 300B can be configured and can operate in a similar manner as electric machine 300A described herein.

The hybrid-electric propulsion system 150 further includes an electric energy storage unit 180 electrically connectable to the electric machines 300A, 300B, and in some embodiments, other electrical loads. In some exemplary embodiments, the electric energy storage unit 180 may include one or more batteries. Additionally, or alternatively, the electric energy storage units 180 may include one or more supercapacitor arrays, one or more ultracapacitor arrays, or both. For the hybrid-electric propulsion system 150 described herein, the electric energy storage unit 180 is configured to store a relatively large amount of electrical power. For example, in certain exemplary embodiments, the electric energy storage unit 180 may be configured to store at least about fifty kilowatt hours of electrical power, such as about seventy-five kilowatt hours of electrical power, and up to about one thousand kilowatt hours of electrical power.

The hybrid-electric propulsion system 150 also includes a power management system having a controller 182 and a power bus 184. The electric machines 300A, 300B, the electric energy storage unit 180, and the controller 182 are each electrically connectable to one another through one or more electric lines 186 of the power bus 184.

The controller 182 is configured to control the power electronics to distribute electrical power between the various components of the hybrid-electric propulsion system 150. For example, the controller 182 may control the power electronics of the power bus 184 to provide electrical power to, or draw electrical power from, the various components, such as the electric machines 300A, 300B, to operate the hybrid-electric propulsion system 150 between various operating modes and perform various functions. Such is depicted schematically as the electric lines 186 of the power bus 184 extend through the controller 182.

The controller 182 can form a part of a computing system 190 of the aircraft 100. The computing system 190 of the aircraft 100 can include one or more processors and one or more memory devices embodied in one or more computing devices. For instance, as depicted in FIG. 1, the computing system 190 includes controller 182 as well as other computing devices, such as computing device 192. The computing system 190 can include other computing devices as well, such as engine controllers (not shown). The computing devices of the computing system 190 can be communicatively coupled with one another via a communication network. For instance, computing device 192 is located in the cockpit of the aircraft 100 and is communicatively coupled with the controller 182 of the hybrid-electric propulsion system 150 via a communication link 194 of the communication network. The communication link 194 can include one or more wired or wireless communication links.

For this embodiment, the computing device 192 is configured to receive and process inputs, e.g., from a pilot or other crew members, and/or other information. In this manner, as one example, the one or more processors of the computing device 192 can receive an input indicating a command to change a thrust output of the first and/or second propulsors 200A, 200B and can cause, in response to the input, the controller 182 to control the electrical power drawn from or delivered to one or both of the electric machines 300A, 300B to ultimately change the thrust output of one or both of the first and second propulsors 200A, 200B.

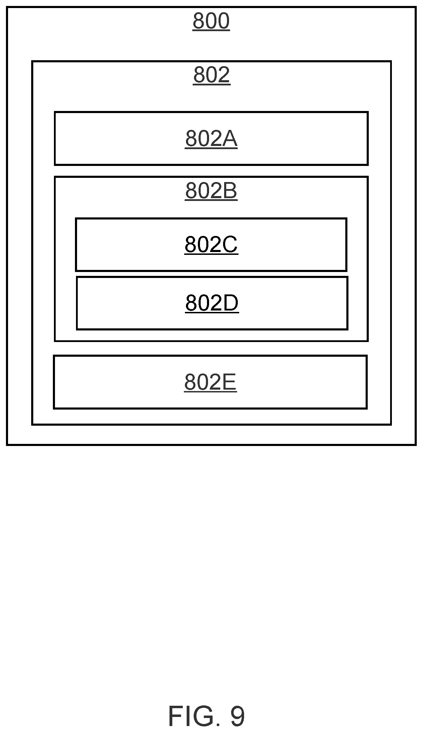

The controller 182 and other computing devices of the computing system 190 of the aircraft 100 may be configured in substantially the same manner as the exemplary computing system 800 and computing devices 802 described below with reference to FIG. 9.

It will be appreciated that the electric machines 300A, 300b, electric energy storage unit 180, and power management system (having the controller 182 and the power bus 184) may more specifically be configured as part of an aeronautical power system integrated with the gas turbine engines of the hybrid-electric propulsion system 150.

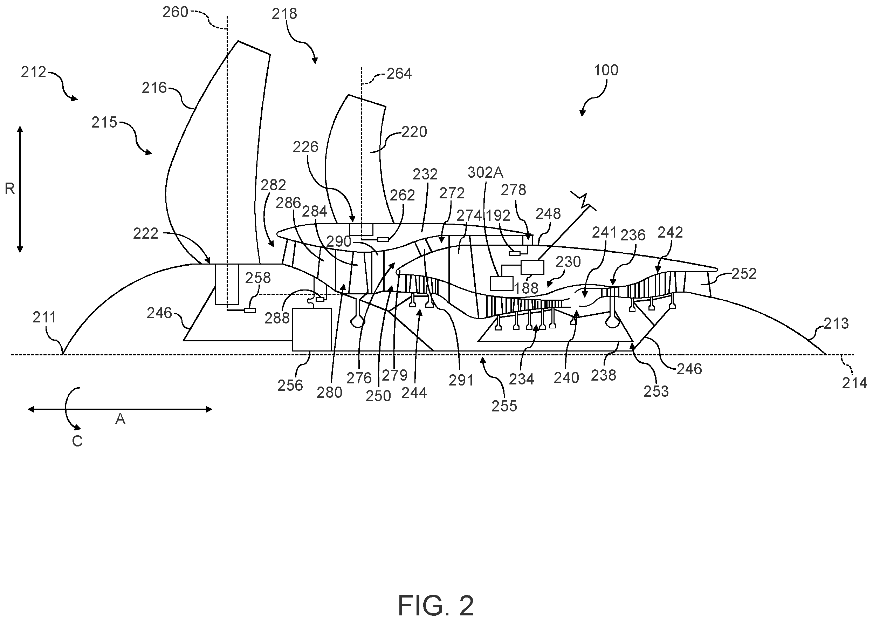

FIG. 2 provides a schematic view of the first propulsor 200A of the hybrid-electric propulsion system 150 of the aircraft 100 of FIG. 1. Although the first propulsor 200A is shown, it will be appreciated that the second propulsor 200B can be configured in the same or similar manner as the first propulsor 200A depicted in FIG. 2. The exemplary gas turbine engine of FIG. 2 is configured as a single unducted rotor engine 210A with a single stage of unducted rotor blades. In such a manner, the rotor assembly may be referred to herein as an "unducted fan." In addition, the gas turbine engine 210A of FIG. 2 includes a third stream extending from the compressor section to a rotor assembly flowpath over the turbomachine, as will be explained in more detail below.

For reference, the gas turbine engine 210A defines an axial direction A, a radial direction R, and a circumferential direction C. Moreover, the gas turbine engine 210A defines an axial centerline or longitudinal axis 214 that extends along the axial direction A. In general, the axial direction A extends parallel to the longitudinal axis 214, the radial direction R extends outward from and inward to the longitudinal axis 214 in a direction orthogonal to the axial direction A, and the circumferential direction extends three hundred sixty degrees (360°) around the longitudinal axis 214. The gas turbine engine 210A extends between a forward end 211 and an aft end 213, e.g., along the axial direction A.

The gas turbine engine 210A includes a turbomachine 230 and a rotor assembly 212, also referred to as a fan section, positioned upstream thereof. Generally, the turbomachine 230 includes, in serial flow order, a compressor section, a combustion section, a turbine section, and an exhaust section. Particularly, as shown in FIG. 2, the turbomachine 230 includes a core cowl 248 that defines an annular core inlet 250. The core cowl 248 further encloses at least in part a low speed or low pressure system and a high speed or high pressure system. For example, the core cowl 248 depicted encloses and supports at least in part a booster or low speed or low pressure compressor 244 for pressurizing the air that enters the turbomachine 230 through core inlet 250. A high speed or high pressure, multi-stage, axial-flow compressor 234 receives pressurized air from the low pressure compressor 244 and further increases the pressure of the air. The pressurized air stream flows downstream to a combustor 240 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 240 downstream to a high pressure turbine 236. The high pressure turbine 236 drives the high pressure compressor 234 through a high pressure shaft 238. In this regard, the high pressure turbine 236 is drivingly coupled with the high pressure compressor 234. The high speed compressor 234, the high speed turbine 236, and the high speed shaft 238 may collectively be referred to as a high speed spool 253 of the gas turbine engine 210A. The high energy combustion products then flow to a low pressure turbine 242. The low pressure turbine 242 drives the low pressure compressor 244 and components of the rotor assembly 212 through a low pressure shaft 246. In this regard, the low pressure turbine 242 is drivingly coupled with the low pressure compressor 244 and components of the rotor assembly 212. The low speed compressor 244, the low speed turbine 242, and the low pressure shaft 246 may collectively be referred to as a low speed spool 255 of the gas turbine engine 210A. The low pressure shaft 246 is coaxial with the high pressure shaft 238 in this example embodiment. After driving each of the turbines 236, 242, the combustion products exit the turbomachine 230 through a turbomachine exhaust nozzle 252.

Accordingly, the turbomachine 230 defines a working gas flowpath or core duct 241 that extends between the core inlet 250 and the turbomachine exhaust nozzle 252. The core duct 241 is an annular duct positioned generally inward of the core cowl 248 along the radial direction R. The core duct 241 (e.g., the working gas flowpath through the turbomachine 230) may be referred to as a second stream.

The rotor assembly 212 includes a fan 215, which is the primary fan in this example embodiment. For the depicted embodiment of FIG. 2, the fan 215 is an open rotor or unducted fan 215. In such a manner, the gas turbine engine 210A may be referred to as an open rotor engine.

As depicted, the fan 215 includes an array of airfoils arranged around the longitudinal axis 214 of engine 210A, and more particularly includes an array of fan blades 216 (only one shown in FIG. 2) arranged around the longitudinal axis 214 of engine 210A. The fan blades 216 are rotatable, e.g., about the longitudinal axis 214. As noted above, the fan 215 is drivingly coupled with the low pressure turbine 242 via the low pressure shaft 246. For the embodiments shown in FIG. 2, the fan 215 is coupled with the low pressure shaft 246 via a power or speed reduction gearbox 256, e.g., in an indirect-drive or geared-drive configuration.

Moreover, the array of fan blades 216 can be arranged in equal spacing around the longitudinal axis 214. Each fan blade 216 has a proximal end or root 222 and a distal end or tip 224, with respect to the longitudinal axis 214, and a span defined therebetween. Each fan blade 216 defines a pitch change or central blade axis 260. For this embodiment, each fan blade 216 of the rotor assembly 212 is rotatable about its central blade axis 260, e.g., in unison with one another. A pitch change mechanism 258 in the form or one or more actuators is provided to facilitate such rotation and therefore may be used to change a pitch of the fan blades 216 about their respective central blade axes 260.

An array of airfoils positioned aft of the fan blades 216 and also disposed around longitudinal axis 214, and more particularly includes a fan guide vane assembly 218 that includes fan guide vanes 220 (only one shown in FIG. 2) disposed around the longitudinal axis 214. For this embodiment, the fan guide vanes 220 are not rotatable about the longitudinal axis 214. Each fan guide vane 220 has a proximal end or root 226 and a distal end or tip 228, with respect to the longitudinal axis 214, and a span defined therebetween. The fan guide vanes 220 may be unshrouded as shown in FIG. 2 or, alternatively, may be shrouded, e.g., by an annular shroud spaced outward from the tips of the fan guide vanes 220 along the radial direction R or attached to the fan guide vanes 220.

Each fan guide vane 220 defines a central guide vane axis 264. For this embodiment, each fan guide vane 220 of the fan guide vane assembly 218 is rotatable about its respective central guide vane axis 264, e.g., in unison with one another. One or more pitch change mechanisms 262 in the form of one or more actuators are provided to facilitate such rotation and, therefore, may be used to change a pitch of the fan guide vane 220 about its respective central guide vane axis 264. However, in other embodiments, each fan guide vane 220 may be fixed or unable to be pitched about its central guide vane axis 264. The fan guide vanes 220 are mounted to a fan cowl 232.

As shown in FIG. 2, in addition to the fan 215, which is unducted, a ducted fan 284 is included aft of the fan 215, such that the gas turbine engine 210A includes both a ducted and an unducted fan which both serve to generate thrust through the movement of air without passage through at least a portion of the turbomachine 230 (e.g., without passage through the high pressure compressor 234 and combustion section for the embodiment depicted). The ducted fan 284 is rotatable about the same axis (e.g., the longitudinal axis 214) as the fan blade 216. The ducted fan 284 is, for the embodiment depicted, driven by the low pressure turbine 242 (e.g. coupled to the low pressure shaft 246). In the embodiment depicted, as noted above, the fan 215 may be referred to as the primary fan, and the ducted fan 284 may be referred to as a secondary fan. It will be appreciated that these terms "primary" and "secondary" are terms of convenience, and do not imply any particular importance, power, or the like.

The ducted fan 284 includes a plurality of fan blades (not separately labeled in FIG. 2) arranged in a single stage, such that the ducted fan 284 may be referred to as a single stage fan. The fan blades of the ducted fan 284 can be arranged in equal spacing around the longitudinal axis 214. Each blade of the ducted fan 284 has a proximal end or root and a distal end or tip and a span defined therebetween.

The fan cowl 232 annularly encases at least a portion of the core cowl 248 and is generally positioned outward of at least a portion of the core cowl 248 along the radial direction R. Particularly, a downstream section of the fan cowl 232 extends over a forward portion of the core cowl 248 to define a fan duct flowpath, or simply a fan duct 272. According to this embodiment, the fan flowpath or fan duct 272 may be understood as forming at least a portion of the third stream of the engine 210A.

Incoming air may enter through the fan duct 272 through a fan duct inlet 276 and may exit through a fan exhaust nozzle 278 to produce propulsive thrust. The fan duct 272 is an annular duct positioned generally outward of the core duct 241 along the radial direction R. The fan cowl 232 and the core cowl 248 are connected together and supported by a plurality of substantially radially-extending, circumferentially-spaced stationary struts 274 (only one shown in FIG. 2). The stationary struts 274 may each be aerodynamically contoured to direct air flowing thereby. Other struts in addition to the stationary struts 274 may be used to connect and support the fan cowl 232, the core cowl 248, or both. In many embodiments, the fan duct 272 and the core duct 241 may at least partially co-extend (generally axially) on opposite sides (e.g., opposite radial sides) of the core cowl 248. For example, the fan duct 272 and the core duct 241 may each extend directly from a leading edge 279 of the core cowl 248 and may partially co-extend generally axially on opposite radial sides of the core cowl 248.

The gas turbine engine 210A also defines or includes an inlet duct 280. The inlet duct 280 extends between an engine inlet 282 and the core inlet 250 and fan duct inlet 276. The engine inlet 282 is defined generally at the forward end of the fan cowl 232 and is positioned between the fan 215 and the fan guide vane assembly 218 along the axial direction A. The inlet duct 280 is an annular duct that is positioned inward of the fan cowl 232 along the radial direction R. Air flowing downstream along the inlet duct 280 is split, not necessarily evenly, into the core duct 241 and the fan duct 272 by a fan duct splitter or leading edge 279 of the core cowl 248. In the embodiment depicted, the inlet duct 280 is wider than the core duct 241 along the radial direction R. The inlet duct 280 is also wider than the fan duct 272 along the radial direction R.

Notably, for the embodiment depicted in FIG. 2, the engine 210A includes one or more features to increase an efficiency of a third stream thrust, Fn_{3S} (e.g., a thrust generated by an airflow through the fan duct 272 exiting through the fan exhaust nozzle 278, generated at least in part by the ducted fan 284). In particular, the engine 210A further includes an array of inlet guide vanes 286 positioned in the inlet duct 280 upstream of the ducted fan 284 and downstream of the core inlet 250. The array of inlet guide vanes 286 are arranged around the longitudinal axis 214. For this embodiment, the inlet guide vanes 286 are not rotatable about the longitudinal axis 214. Each inlet guide vane 286 defines a central blade axis (not labeled for clarity), and is rotatable about its respective central blade axis, e.g., in unison with one another. In such a manner, the inlet guide vanes 286 may be considered a variable geometry component. One or more actuators 288 are provided to facilitate such rotation and therefore may be used to change a pitch of the inlet guide vanes 286 about their respective central blade axes. However, in other embodiments, each inlet guide vane 286 may be fixed or unable to be pitched about its central blade axis.

Further, located downstream of the ducted fan 284 and upstream of the fan duct inlet 276, the gas turbine engine 210A includes an array of outlet guide vanes 290. As with the array of inlet guide vanes 286, the array of outlet guide vanes 290 are not rotatable about the longitudinal axis 214. However, for the embodiment depicted, unlike the array of inlet guide vanes 286, the array of outlet guide vanes 290 are configured as fixed-pitch outlet guide vanes.

Further, it will be appreciated that for the embodiment depicted, the fan exhaust nozzle 278 of the fan duct 272 is further configured as a variable geometry exhaust nozzle 278. In such a manner, the engine 210A includes one or more actuators 292 for modulating the variable geometry exhaust nozzle 278. For example, the variable geometry exhaust nozzle 278 may be configured to vary a total cross-sectional area (e.g., an area of the nozzle in a plane perpendicular to the longitudinal axis 214) to modulate an amount of thrust generated based on one or more engine operating conditions (e.g., temperature, pressure, mass flowrate, etc. of an airflow through the fan duct 272). A fixed geometry exhaust nozzle may also be adopted.

Moreover, referring still to FIG. 2, in exemplary embodiments, air passing through the fan duct 272 may be relatively cooler (e.g., lower temperature) than one or more fluids utilized in the turbomachine 230. In this way, one or more heat exchangers 291 may be positioned in thermal communication with the fan duct 272. For example, one or more heat exchangers 291 may be disposed within the fan duct 272 and utilized to cool one or more fluids from the core engine with the air passing through the fan duct 272, as a resource for removing heat from a fluid, e.g., compressor bleed air, oil or fuel.

Referring still to FIG. 2, as noted, the first propulsor 200A includes electric machine 300A operably coupled with a rotating component thereof. In this regard, the first propulsor 200A is an aeronautical hybrid-electric propulsion machine. Particularly, as shown in FIG. 2, the electric machine 300A is mechanically coupled with the low speed spool 255 of the gas turbine engine 210A, and more particularly, the low pressure shaft 246 of the low speed spool 255. As depicted, the electric machine 300A is embedded within the core of the gas turbine engine 210A. Specifically, the electric machine 300A is positioned inward of the core duct 241 along the radial direction R. Moreover, for this embodiment, the electric machine 300A is positioned generally at the aft end of the gas turbine engine 210A and is at least partially overlapping with or aft of the low pressure turbine 242 along the axial direction A.

However, in other exemplary embodiments, the electric machine 300A may be positioned at other suitable locations within the gas turbine engine 210A. For instance, in some embodiments, the electric machine 300A can be coupled with the low speed spool 255 in other suitable locations. For instance, in some embodiments, the electric machine 300A can be positioned forward of the low pressure compressor 244 along the axial direction A and inward of the turbomachinery flowpath 254 along the radial direction R. Further, as shown in FIG. 2, the electric machine 300A mechanically coupled with the low pressure shaft 246 is electrically coupled with the power bus 184.

In addition or alternatively to the gas turbine engine 210A having electric machine 300A coupled to the low speed spool 255, in the embodiment depicted, the gas turbine engine 210A further includes an electric machine 302A mechanically coupled with the high speed spool 253 of the gas turbine engine 210A, and more particularly, the high speed shaft 238 of the high speed spool 253. As depicted in FIG. 2, the electric machine 302A is mechanically coupled with the high speed shaft 238 through a mechanical linkage. The electric machine 302A is positioned outward of the core duct 241 along the radial direction R and is positioned forward of the combustion section of the gas turbine engine 210A along the axial direction A.

However, in other exemplary embodiments, the electric machine 302A may be positioned at other suitable locations within the gas turbine engine 210A (e.g., inward of the core duct 241 along the radial direction R).

Like the electric machine 300A mechanically coupled with the low speed spool 255, the electric machine 302A mechanically coupled with the high speed spool 253 can be an electric motor operable to drive or motor the high speed shaft 238, e.g., during a starting operation of the gas turbine engine 210A. In other embodiments, the electric machine 302A can be an electric generator operable to convert mechanical energy into electrical energy. In this way, electrical power generated by the electric machine 302A can be directed to various engine and/or aircraft systems. In some embodiments, the electric machine 302A can be a motor/generator with dual functionality.

Further, as shown in FIG. 2, the electric machine 302A mechanically coupled with the high speed shaft 238 is also electrically coupled with the power bus 184. More specifically, the aeronautical power system may include a power electronics assembly 188 located between the electric machines 300A, 302A and the power bus 184. The power electronics assembly 188 may comprise one or more power inverters, power controllers, or other types of electronic components in electric connection with one or more electric power loads, electric power sources, or both (e.g., of the engine or the aircraft, or both).

Additionally or alternatively, in other exemplary embodiments, any other suitable gas turbine engine may be provided. For example, in other exemplary embodiments, the gas turbine engine may be a turboshaft engine, a turboprop engine, turbojet engine, etc. Moreover, for example, although the engine is depicted as a single unducted rotor engine, in other embodiments, the engine may include a multi-stage open rotor configuration, and aspects of the disclosure described hereinbelow may be incorporated therein.

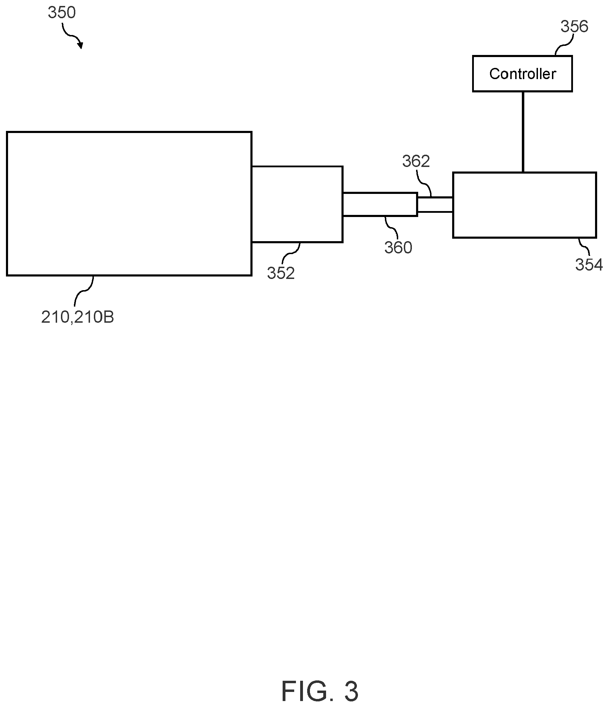

FIG. 3 depicts a schematic diagram of a torque transfer assembly 350 in accordance with an embodiment of the present disclosure. The torque transfer assembly 350 may be used in one or more locations in the gas turbine engines 210, 210B (FIGS. 1 and 2) or elsewhere in the aircraft 100 (FIG. 1). In the illustrated embodiment of FIG. 3, the torque transfer assembly 350 includes a gearbox 352 that may be drivably connected to an engine such as, by way of non-limiting example, the gas turbine engine 210, 210B. The torque transfer assembly 350 may also include an electric machine 354. The electric machine 354 may be configured as the electric machines 300A, 300B, 302A (FIGS. 1 and 2). The electric machine 354 may be, by way of non-limiting example, an electric motor/generator. The electric machine 354 may be communicatively and/or electrically connected to a controller 356. The controller 356 may be configured to generate control signals for controlling one or more operating parameters of the electric machine 354 and/or to receive data from the electric machine 354, or related to the electric machine 354, corresponding to one or more operating parameters and/or conditions of the electric machine 354. The controller 356 may be the same controller as the controller 182 (FIG. 1) or may be a separate or independent controller. The controller 356 may be configured in substantially the same manner as the exemplary computing system 800 and computing devices 802 described below with reference to FIG. 9.

The gearbox shaft 360 may extend from the gearbox 352 and connect with a generator shaft 362 of the electric machine 354. Under normal operating conditions, rotation of the gearbox shaft 360 may drive the generator shaft 362. However, in the event of an operational anomaly, disengagement of the gearbox shaft 360 from the generator shaft 362 may be desired. Embodiments of the present disclosure enable the selective engagement and disengagement of the gearbox shaft 360 with the generator shaft 362.

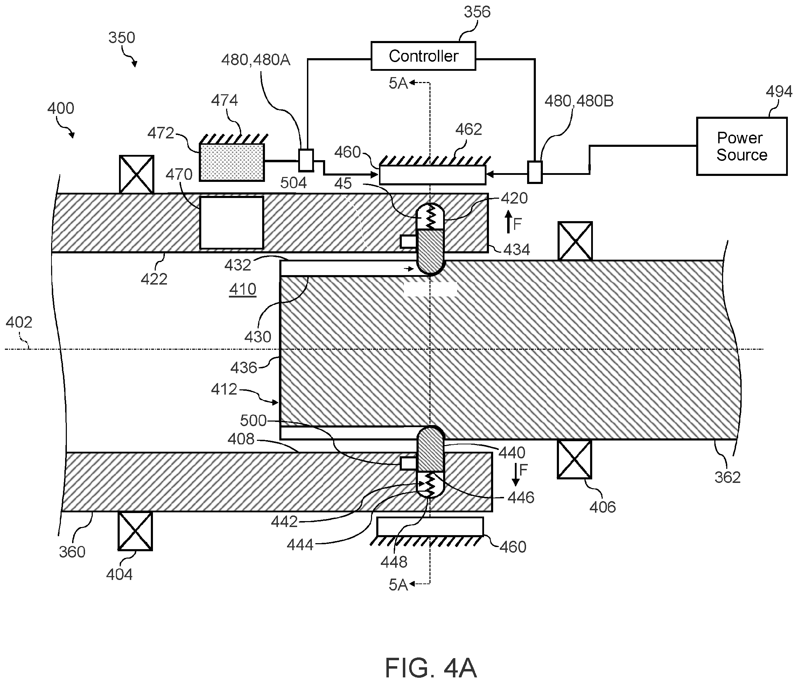

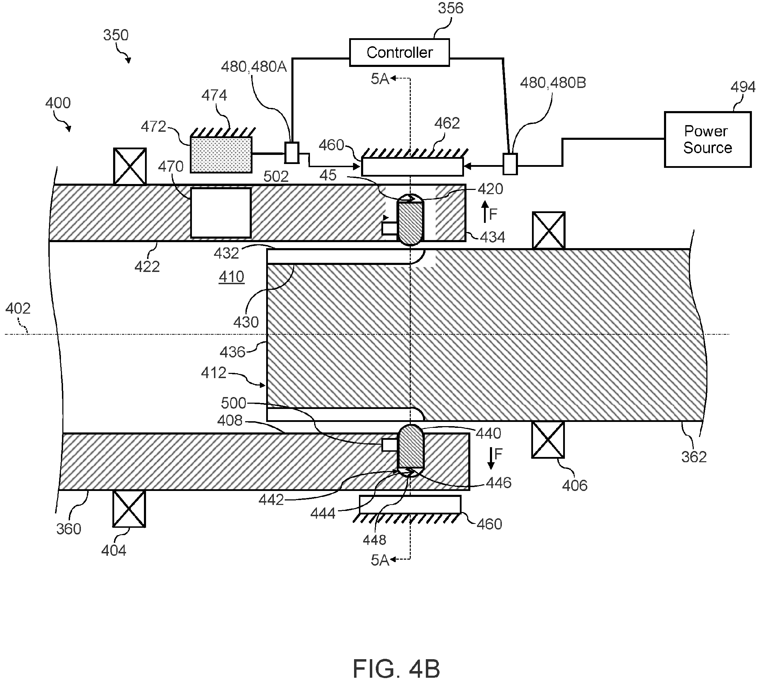

FIGS. 4A and 4B depict schematic, section views of a shaft disconnection system 400 in accordance with an embodiment of the present disclosure. The shaft disconnection system 400 may be used in one or more locations in the gas turbine engines 210, 210B (FIGS. 1 and 2) or elsewhere in the aircraft 100 (FIG. 1). In FIGS. 4A and 4B, the shaft disconnection system 400 is depicted in connection with the torque transfer assembly 350 of FIG. 3. The shaft disconnection system 400 enables the selective engagement and disengagement of the gearbox shaft 360 with the generator shaft 362. In FIG. 4A, the gearbox shaft 360 and the generator shaft 362 are depicted in engagement with each other, and in FIG. 4B, the gearbox shaft 360 and the generator shaft 362 are depicted disengaged from each other. In FIGS. 4A and 4B, the gearbox shaft 360 and the generator shaft 362 are positioned in coaxial alignment with each other about an axis 402. In connection with FIGS. 4A and 4B, a radial direction shall refer to directions and orientations that extend substantially perpendicular to the axis 402. The gearbox shaft 360 may be rotationally supported by a gearbox shaft bearing 404, and the generator shaft 362 may be rotationally supported by a generator shaft bearing 406. In the illustrated embodiment, the gearbox shaft 360 and the generator shaft 362 are positioned in an overlapping relationship along an interface 408. The gearbox shaft 360 may include a hollow portion 410 that is in an overlapped relationship with a portion 412 of the generator shaft 362 such that the portion 412 of the generator shaft 362 is disposed within the hollow portion 410. In other words, in the illustrated embodiment, the portion 410 is disposed radially inward of the gearbox shaft 360. In exemplary embodiments, the shaft disconnection system 400 selectively engages or disengages the gearbox shaft 360 with respect to the generator shaft 362.

In exemplary embodiments, the gearbox shaft 360 includes one or more detents 420 disposed on a radially inward surface 422 of the gearbox shaft 360, and the generator shaft 362 includes one or more detents 430 disposed on a radially outward surface 432 of the generator shaft 362. In exemplary embodiments, a quantity of the detents 420 is the same as a quantity of the detents 430. In embodiments where a plurality of detents 420, 430 are used, the detents 420, 430 may be spaced apart from each other extending circumferentially about the respective gearbox shaft 360 and the generator shaft 362 and be located such that the detents 420 circumferentially align with the detents 430. In exemplary embodiments, the one or more detents 420 are axially positioned on the gearbox shaft 360 to axially align with at least a portion of the one or more detents 430 with respect to the axis 402. In the embodiment depicted in FIGS. 4A and 4B, the one or more detents 420 are axially positioned spaced apart from an end 434 of the gearbox shaft 360. The one or more detents 430 on the generator shaft 362 extend axially from an end 436 of the generator shaft 362 to an axial location of a corresponding detent 420 on the gearbox shaft. In other words, the detent 430 on the generator shaft 362 may be in the form of a groove to facilitate the assembly of the generator shaft 362 with the gearbox shaft 360.

In exemplary embodiments, one or more interface elements 440 are coupled to the gearbox shaft 360 and are positioned to be in axial alignment with respective detents 420, 430. In exemplary embodiments, each interface element 440 may be coupled to the gearbox shaft 360 to enable radial displacement of the respective interface element 440. In the embodiment depicted in FIGS. 4A and 4B, each interface element 440 is coupled to a respective detent 420 via a biasing member 442. In exemplary embodiments, the biasing member 442 may be a spring 444 that biases the respective interface element 440 radially inward. Thus, the biasing member 442 biases the respective interface element 440 radially inward toward the generator shaft 362. Accordingly, when the respective detents 420, 430 are circumferentially aligned with each other, the biasing member 442 biases the respective interface element 440 radially inward toward a respective detent 430. In exemplary embodiments, the biasing member 442 includes a first end 446 coupled to the interface element 440 and a second end 448 coupled to an interior portion 450 of a respective detent 420.

In exemplary embodiments, the shaft disconnection system 400 includes one or more electromagnets 460 positioned radially outward of the gearbox shaft 360 and in axial alignment with the one or more detents 420. The one or more electromagnets 460 may be coupled or fixed to a statis support 462. The one or more electromagnets 460 are positioned radially outward of the one or more interface elements 440 and in axial alignment with the one or more interface elements 440. The one or more electromagnets 460 may extend circumferentially about the gearbox shaft 360. The one or more electromagnets 460 may include a single electromagnet spanning an entire circumference of the gearbox shaft 360 or may be a plurality of electromagnets 460 each extending for a defined circumferential span and may be located at different circumferential positions about the gearbox shaft 360. The one or more electromagnets 460 may span the entire circumference of the gearbox shaft 360 or may be spaced apart circumferentially such that that a magnetic field generated by the one or more electromagnets 460 spans the entire circumference of the gearbox shaft 360. In exemplary embodiments, the one or more interface elements 440 are formed of a ferromagnetic material such as, by way of non-limiting example, iron, cobalt, and/or nickel, such that the one or more interface elements 440 are attracted toward the one or more one or more electromagnets 460 when the one or more electromagnets 460 are energized. In other words, in response to a magnetic field generated by the one or more electromagnets 460, the one or more interface elements 440 are drawn radially outward toward the respective detents 420.

In the embodiment illustrated in FIGS. 4A and 4B, the shaft disconnection system 400 includes one or more magnets 470 coupled to and/or disposed on or in the gearbox shaft 360. In exemplary embodiments, the one or more magnets 470 are positioned axially spaced apart from the one or more detents 420 in a direction away from the end 434 of the gearbox shaft 360. The shaft disconnection system 400 also includes one or more coils 472 located radially outward from the gearbox shaft 360, radially outward of one or more magnets 470, and in axial alignment with the one or more magnets 470. The one or more coils 472 may be coupled or fixed to a static support 474 and may include one or more wires or conductors. In the illustrated embodiment, the shaft disconnection system 400 also includes one or more capacitors 480 electrically coupled to the one or more electromagnets 460. The one or more capacitors 480 are configured to store electrical energy and output the stored electrical to the one or more electromagnets 460 to energize or activate the one or more electromagnets 460. In the illustrated embodiment, the one or more capacitors 480 include one or more capacitors 480A electrically connected to the one or more coils 472. The one or more capacitors 480A are configured to store electrical energy generated by and received from the one or more coils 472 in response to the rotational movement of the one or more magnets 470 with respect to the one or more coils 472. In the illustrated embodiment, the shaft disconnection system 400 also includes one or more capacitors 480B electrically connected to a power source 494. The power source 494 may be any source of power connected, wired or wirelessly, to the one or more capacitors 480B. The power source 494 may be, by way of non-limiting example, another generator or another source of power from a component of the aircraft 100 (FIG. 1) or gas turbine engine 210A, 210B (FIGS. 1 and 2). Although the one or more magnets 470 are depicted in FIGS. 4A and 4B on the gearbox shaft 360, it should be understood that, additionally or alternatively, the one or more magnets 470 may be positioned on the generator shaft 362.

In exemplary embodiments, the one or more capacitors 480 may include one or more supercapacitors. A supercapacitor may be advantageously used as a peak-power source in a high-power application. A supercapacitor may include a plurality of individual supercapacitors which may all have the same nominal electrical parameters and are all connected in series. Thus, a number of individual supercapacitors may be connected in series to provide sufficient power for a desired application. Further, it should be understood that the shaft disconnection system 400 may be configured only with the one or more capacitors 480A, only with the one or more capacitors 480B, or with both the one or more capacitors 480A, 480B. It should also be understood that if the shaft disconnection system 400 is configured without the one or more capacitors 480A, the one or more magnets 470 and/or the one or more coils 472 may be omitted.

In exemplary embodiments, the one or more capacitors 480 are communicatively and/or electrically connected to the controller 356. The controller 356 may be configured to generate control signals for providing electrical energy to the one or more electromagnets 460 to energize and/or actuate the one or more electromagnets 460. In exemplary embodiments, the one or more controllers 356 may be configured to generate and transmit one or more control signals to the one or more capacitors 480 to cause the one or more capacitors 480 to output or discharge their stored electrical energy to the one or more electromagnets 460.

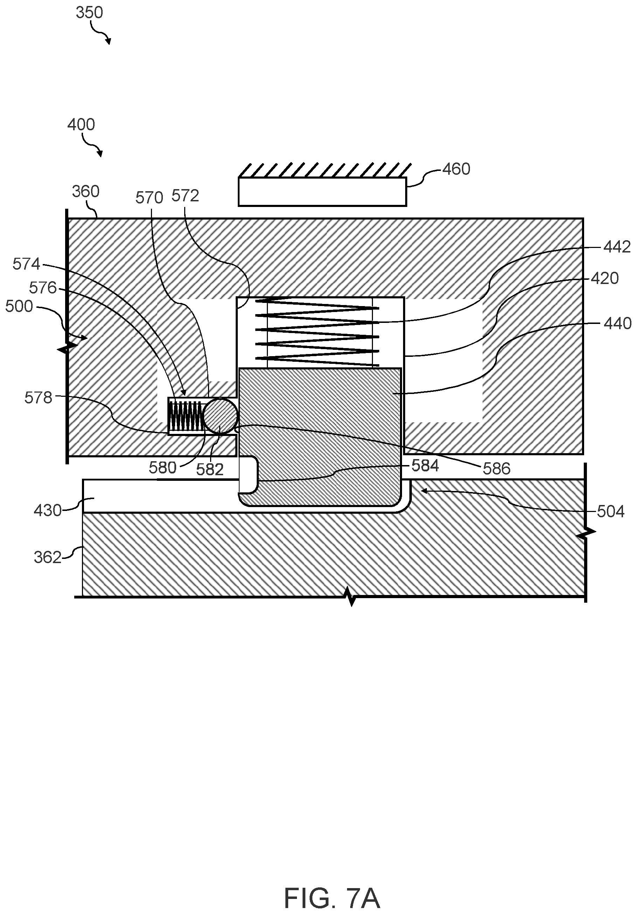

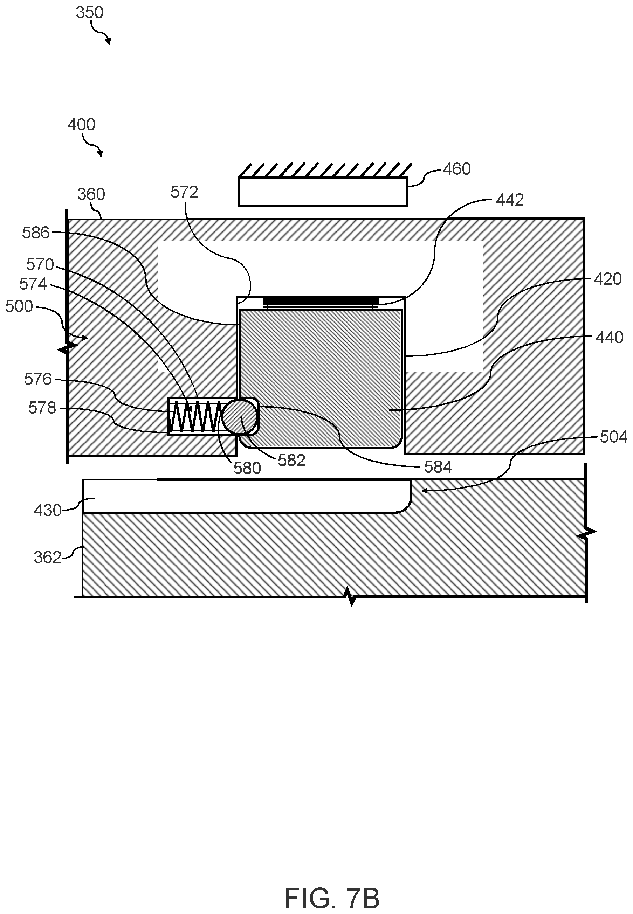

In the embodiment illustrated in FIGS. 4A and 4B, the shaft disconnection system 400 further includes one or more locking mechanisms 500. The one or more locking mechanisms 500 are positioned and/or configured to retain the one or more interface elements 440 in a retracted position 502 (FIG. 4B) with respect to the gearbox shaft 360. In other words, in an extended position 504 (FIG. 4A) of one or more interface elements 440 with respect to the gearbox shaft 360, the one or more interface elements 440 are in engagement with the generator shaft 362, and in the retracted position 502 (FIG. 4B) of the one or more interface elements 440, the one or more interface elements 440 are not in engagement with the generator shaft 362. Accordingly, FIG. 4A depicts the one or more interface elements 440 in the extended position 504, and FIG. 4B depicts the one or more interface elements 440 in the retracted position 502. There may be a separate locking mechanism 500 for each interface element 440, or a single locking mechanism 500 may be configured to retain a plurality of interface elements 440 in a ganged manner in the retracted position. An exemplary embodiment of the one or more locking mechanisms 500 is further described in connection with FIGS. 7A and 7B.

Thus, in operation, in a state of engagement or connection of the gearbox shat 360 with the generator shaft 362 as depicted in FIG. 4A, the one or more interface elements 440 are in the extended position 504 such that at least a portion of the one or more interface elements 440 contact or are in engagement with at least a portion of the generator shaft 362 to transfer torque between the gearbox shaft 36-0 and the generator shaft 362. In exemplary embodiments, in the extended position 504, the one or more interface elements 440 extend into and contact at least a portion of the detents 430 of the generator shaft 362.

Rotation of the gearbox shaft 360 about the axis 402 causes the one or magnets 470 to rotate about the axis 402. The relative movement of the one or more magnets 470 with respect to the one or more coils 472 causes a current to be induced in the one or more coils 472 that flows to the one or more capacitors 480A where electrical energy from the current flow is stored by the one or more capacitors 480A. In response to an anomaly where a disengagement between the gearbox shaft 360 and the generator shaft 362 is needed, the controller 356 may control the one or more capacitors 480A or other circuitry to discharge or transfer the electrical energy stored by the one or more capacitors 480A to the one or more electromagnets 460. The electrical energy received by the one or more electromagnets 460 causes the one or more electromagnets 460 to be actuated or energized to produce a magnetic field proximate the one or more interface elements 440. The magnetic field generated by the one or more electromagnets 460 creates a radially outward attractive force F in the direction indicated in FIG. 4A causing the one or more interface elements 440 to move radially outward from the extended position 504 as depicted in FIG. 4A to the retracted position as depicted in FIG. 4B. In the retracted position 502, the one or more interface elements 440 are withdrawn from the one or more detents 430 such that the one or more interface elements 440 are not in contact or engagement of the generator shaft 362 and enabling the gearbox shaft 360 to rotate independently of the gearbox shaft 360.

As depicted in FIGS. 4A and 4B, the one or more capacitors 480B may, alternately or additionally to the one or more capacitors 480A, be controlled by the controller 356 to actuate or energize the one or more electromagnets 460. However, in exemplary embodiments, solely utilizing the one or more capacitors 480A to energize the one or more electromagnets 460 enables the disengagement of the gearbox shaft 360 from the generator shaft 362 without relying on electrical power from another source in the aircraft 100 (FIG. 1) or the gas turbine engines 210A, 210B (FIGS. 1 and 2). Thus, in exemplary embodiments, the shaft disconnection system 400 may be self-actuated based on current produced via the rotation of the gearbox shaft 360.

As indicated above, the one or more biasing members 442 bias the one or more interface elements 440 radially inward and toward the detents 430 of the generator shaft 362. In exemplary embodiments, the magnetic force caused by the one or more electromagnets 460 is greater than the biasing force applied by the one or biasing members 442 such that when the one or more electromagnets 460 are energized, the biasing force of the one or more biasing members 442 is overcome and the interface elements 440 move radially outward away from the generator shaft 362. Accordingly, de-actuating or de-energizing the one or more electromagnets 460 causes a cessation of the magnetic force acting on the one or more interface elements 440, and the biasing force applied by the one or more biasing members 442 in a radially inward direction causes the one or more interface elements 440 to move radially inward toward the one or more detents 430 to re-engage the generator shaft 362.

In embodiments where the locking mechanism 500 is utilized, the one or more electromagnets 460 may be de-energized, and the locking mechanism 500 retains the one or more interface elements 440 in the retracted position 502. Thus, utilizing the locking mechanism 500 enables the power to the one or more electromagnets 460 to be terminated without a reconnection of the gearbox shaft 360 with the generator shaft 362.

In exemplary embodiments, to reconnect or re-engage the gearbox shaft 360 with the generator shaft 362, the controller 356 may control a rotational speed of the generator shaft 362 to be synchronized with a rotational speed of the gearbox shaft 360. As used herein, the term "synchronized" in connection with a rotational speed shall mean about or approximately the same rate of rotation. In exemplary embodiments, the controller 356 may transmit one or more control signals to the electric machine (FIG. 3) to synchronize a rotational speed of the generator shaft 362 with a rotational speed of the gearbox shaft 360 before reconnecting or re-engaging the gearbox shaft 360 with the generator shaft 362. In exemplary embodiments, the controller 356 may transmit one or more control signals to accelerate or speed up the rotational speed of the generator shaft 362 to approximately match the rotational speed of the gearbox shaft 360 before disengaging the one or more locking mechanisms 500 to thereafter cause the one or more interface elements 440 to re-engage the generator shaft 362. Thus, embodiments of the present disclosure enable the connection and/or disconnection of the gearbox shaft 360 with respect to the generator shaft 362 at various non-zero rotational speeds.

In exemplary embodiments, the controller 356 may be configured to actuate the shaft disconnection system 400 to disengage the generator shaft 362 from the gearbox shaft 360 based on a rotational speed of the gearbox shaft 360 and/or a rotational speed of the generator shaft 362. In exemplary embodiments, the controller 356 may monitor and/or receive data corresponding to the rotational speed of the gearbox shaft 360 (e.g., via one or more sensor (not shown) associated with the gearbox 352 (FIG. 3) and/or the gearbox shaft 360 and/or the generator shaft 362). In response to the rotational speed of the gearbox shaft 360 and/or generator shaft 362 nearing, meeting, or exceeding a threshold, the controller 356 may cause one or more of the capacitors 480A, 480B to discharge their stored electrical energy to the one or more electromagnets 460 to disengage the one or more interface elements 440 from the generator shaft 362. The controller 356 may further be configured to assess and/or otherwise determine an amount of electrical energy stored by the one or more capacitors 480 to determine a source of electrical energy to energize the one or more electromagnets 460.

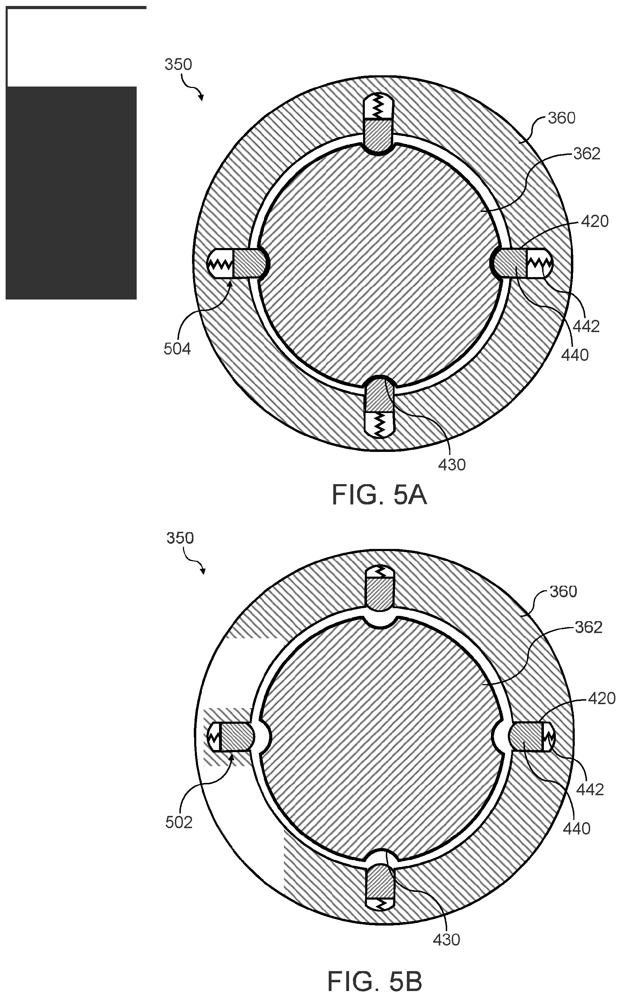

FIGS. 5A and 5B are schematic, section views depicting a portion of the shaft disconnection system 400 according to embodiments of the present disclosure taken along the line 5A-5A of FIG. 4A and the line 5B-5B of FIG. 4B, respectively. FIG. 5A depicts the gearbox shaft 360 in engagement with the generator shaft 362, and FIG. 5B depicts the gearbox shaft 360 disengaged from the generator shaft 362. In FIGS. 5A and 5B, a plurality of interface elements 440 are depicted. The interface elements 440 are spaced circumferentially about the radially inward surface 422 of the gearbox shaft 360. Correspondingly, each interface element 440 is movable from between the extended position 504 (FIG. 5A) and the retracted position 502 (FIG. 5B) with respect to the detents 420, 430. In the embodiments illustrated in FIGS. 5A and 5B, four interface elements 440 are depicted, along with four each of the detents 420, 430, being equally spaced apart circumferentially about the respective gearbox shaft 360 and the generator shaft 362. However, it should be understood that the quantity and/or spacing of the interface elements 440, along with the respective detents 420, 430, may be otherwise configured (e.g., a greater or lesser quantity and/or varied spacing).

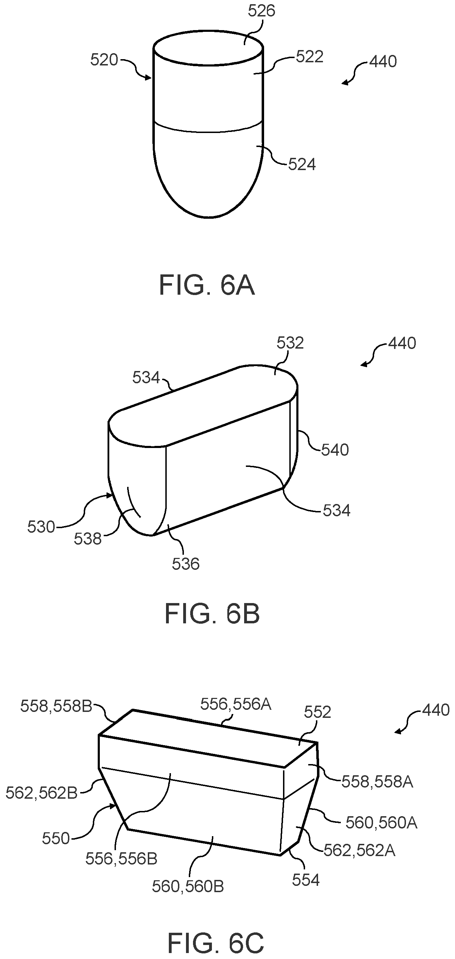

FIGS. 6A-6C are schematic diagrams depicting various embodiments of the interface element 440 according to the present disclosure. In FIG. 6A, the interface element 440 is in the form of a pin 520 having a cylindrical portion 522 and a spherical portion 524 extending from the cylindrical portion 522. In the illustrated embodiment of FIG. 6A, the cylindrical portion 522 terminates at a planar end 526 opposite the spherical portion 524. In exemplary embodiments, the detents 420, 430 (FIGS. 4A, 4B, 5A, 5B) are formed having complementary geometric aspects corresponding to various portion of the interface element 440 to enable the interface element 440 to reside in and/or interface with the respective detents 420, 430 (FIGS. 4A, 4B, 5A, 5B). In the exemplary embodiment depicted in FIG. 6A, the end 526 may reside within the detent 420 (FIGS. 4A, 4B, 5A, 5B) and be coupled to the biasing member 442 (FIGS. 4A, 4B, 5A, 5B), and at least a portion of the spherical portion 524 may interface with the detent 430 (FIGS. 4A, 4B, 5A, 5B).

In FIG. 6B, the interface element 440 is an elongated form of the pin 520 of FIG. 6A. In the embodiment depicted in FIG. 6B, the interface element 440 is elongated in the axial direction (e.g., corresponding to the axis 402 (FIGS. 4A and 4B). Thus, in FIG. 6B, the interface element 440 is a pin 530 having a planar end 532. The pin 530 includes oppositely disposed planar wall portions 534 extending from the end 532 and interfacing with each other at a curved portion 536 opposite the end 532. The pin 530 also includes oppositely disposed curved end portions 538 and 540. Each curved end portion 538, 540 extends from the end 532 to the interface of the wall portions 534 opposite the end 532. Each curved end portion 538, 540 also extends transversely to the oppositely disposed wall portions 534, and each wall portion 534 extends longitudinally between the curved end portions 538, 540. Each curved end portion 538, 540 may be partially cylindrical and/or partially spherical and/or partially elliptical. In exemplary embodiments, the end 532 may reside within the detent 420 (FIGS. 4A, 4B, 5A, and 5B) and be coupled to the biasing member 442 (FIGS. 4A, 4B, 5A, 5B), and at least a portion of the curved portion 536 may interface with the detent 430 (FIGS. 4A, 4B, 5A, and 5B). In exemplary embodiments, the pin 530 may be oriented with respect to the detents 420, 430 (FIGS. 4A, 4B, 5A, and 5B) such that the longitudinal span of the wall portions 534 extending from the curved end portion 538 to the curved end portion 540 extend in a direction of the axis 402 (FIG. 4) to increase an amount of surface area contact of the pin 530 with the detent 430 of the generator shaft 362 (FIGS. 4A, 4B, 5A, and 5B).

FIG. 6C depicts the interface element 440 formed having an elongated wedge shape. In the embodiment depicted in FIG. 6C, the interface element 440 is a pin 550 having a planar end 552 and a planar end 554 opposite the end 552. Intermediate planar walls 556 and 558 extend away from the end 552 toward the end 554. The walls 556 include oppositely disposed walls 556A and 556B, and the walls 558 include oppositely disposed walls 558A and 558B. The walls 556 and 558 have a uniform length extending away from the end 552 toward the end 554. However, the walls 556 have a greater length defining a longitudinal direction of the pin 550 than a length of the walls 558 in the transverse direction. The pin 550 also includes oppositely disposed transition walls 560 extending from a respective wall 556 to the end 554 and oppositely disposed transition walls 562 extending from a respective wall 558 to the end 554. The transition walls 560A and 560B angle inwardly toward each other as the respective transition wall 560A, 560B approaches the end 554. Similarly, the transition walls 562A and 562B angle inwardly toward each other as the respective transition wall 562A, 562B approaches the end 554. Thus, in FIG. 6C, the pin 550 resembles a wedge-shaped tooth of a gear. In exemplary embodiments, the end 552 may reside within the detent 420 (FIGS. 4A, 4B, 5A, and 5B) and be coupled to the biasing member 442 (FIGS. 4A, 4B, 5A, 5B), and at least a portion of the transition walls 560, 562 may interface with the detent 430 (FIGS. 4A, 4B, 5A, and 5B). In exemplary embodiments, the pin 550 may be oriented with respect to the detents 420, 430 (FIGS. 4A, 4B, 5A, and 5B) such that the longitudinal span of the walls 556 extend in a direction of the axis 402 (FIG. 4) to increase an amount of surface area contact of the pin 550 with the detent 430 of the generator shaft 362 (FIGS. 4A, 4B, 5A, and 5B).

FIG. 7A is a schematic, section, side view of an exemplary embodiment of the locking mechanism 500 of the shaft disconnection system 400 depicted in a disengaged state in accordance with the present disclosure, and FIG. 7B is a schematic, section, side view of an exemplary embodiment of the locking mechanism 500 of the shaft disconnection system 400 of FIG. 7A depicted in an engaged state in accordance with the present disclosure. In the embodiment illustrated in FIGS. 7A and 7B, the locking mechanism 500 includes a recess 570 formed in a sidewall 572 of the detent 420 extending axially inward from the sidewall 572 in a direction away from the interface element 440. Disposed within the recess 570 is a biasing member 574. The biasing member 574 includes a first end 576 coupled to an interior portion 578 of the recess 570 and a second end 580 in engagement with an interface element 582. The biasing member 574 may include a spring or other type of structure that biases the interface element 582 outwardly from the recess 570 and towards the interface element 440. The interface element 582 may be a ball, a pin, or another type of structural element configured to engage at least a portion of the interface element 440 in an engaged state of the locking mechanism 500 (as depicted in FIG. 7B). In exemplary embodiments, the interface element 440 includes a recess 584 extending axially inwardly from a sidewall 586 of the interface element 440 in a direction away from the from the sidewall 572 of the detent 420. The recess 584 is sized and/or configured to receive at least a portion of the interface element 582 therein when the locking mechanism 500 is in the engaged state (as depicted in FIG. 7B).

Referring still to FIG. 7A, in a disengaged state of the locking mechanism 500, the interface element 582 is disposed at least partially within the recess 570 and is not in engagement with the recess 584 of the interface element 440 (e.g., when the interface element 440 is in the extended position 504). As described above in connection with at least FIGS. 4A and 4B, actuating and/or energizing the one or more electromagnets 460 cause the interface element 440 to move radially outward and further into a corresponding detent 420 such that the recess 584 becomes at least partially aligned with the interface element 582. In response to the recess 584 becoming at least partially aligned with the interface element 582, the biasing force applied by the biasing member 574 causes the interface element 582 to move outwardly from the recess 570 and into engagement with at least a portion of the recess 584 of the interface element 440. The engagement of the interface element 582 with the interface element 440 retains the interface element 440 in the retracted position 502 as depicted in FIG. 7A. In exemplary embodiments, the force applied by the biasing member 574, alone or in combination with centrifugal forces acting on the interface element 440 as a result of rotation of the gearbox shaft 360, is greater than a biasing force applied by the biasing member 442 such that, in an engaged state of the locking mechanism 500, the interface element 440 remains disengaged from the generator shaft 362. Thus, in exemplary embodiments, the one or more electromagnets 460 may be de-energized after engagement of the locking mechanism 500.

In exemplary embodiments, to disengage the locking mechanism 500, the one or more electromagnets 460 may be actuated or energized with a reverse polarity than a polarity used to draw the interface elements 440 radially outward to the retracted position 502 such that the one or more electromagnets 460 cause a radially inward force to be applied to the interface elements 440. In exemplary embodiments, energy stored by the one or more capacitors 480A may be used to energize the one or more electromagnets 460 to enable the disengagement of the locking mechanism 500. The radially inward force resulting from the energizing of the one or more electromagnets 460, alone or in combination with the force applied by the biasing member 442, overcomes the biasing force applied by the biasing member 574 such that the interface element 440 moves radially inward to the extended position 504 (as depicted in FIG. 7B) such that the gearbox shaft 360 and the generator shaft 362 are in engagement with each other.

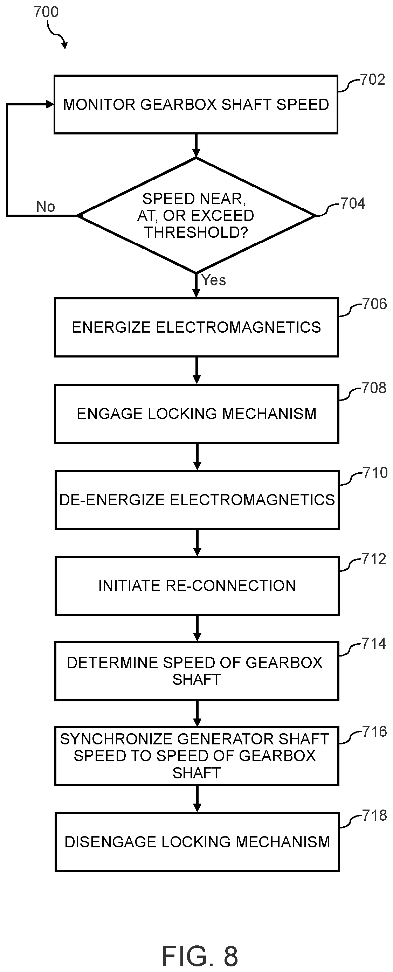

FIG. 8 is a flow diagram of an exemplary method 700 of disconnecting and connecting shafts in accordance with an embodiment of the present disclosure. The method 700 is described in connection with the gearbox shaft 360 of the gearbox 352 and the generator shaft 362 of the electric machine 354 (FIG. 3); however, it should be understood that the method 700 is applicable to other types of devices and corresponding shaft arrangements. At 702, the gearbox shaft 360 and the generator shaft 362 are connected with each other, and the method 700 at 702 includes monitoring a rotational speed of the gearbox shaft 360. By way of non-limiting example, the controller 356 may monitor the rotational speed of the gearbox shaft 360. At 704, the method 700 makes a determination whether to disengage the generator shaft 362 from the gearbox shaft 360 based on whether a rotational speed of the gearbox shaft 360 is near, has reached, and/or has exceeded a rotational speed threshold. By way of non-limiting example, the controller 356 may compare an actual rotational speed of the gearbox shaft 360 to a defined threshold rotational speed. It should be understood that another operational anomaly may be used to initiate a disconnection of the generator shaft 362 from the gearbox shaft 360. If the determination at 704 is negative, the method 700 returns to 702, where the rotational speed of the gearbox shaft 360 continues to be monitored. If the determination at 704 is positive, the method 700 proceeds to 706, where the one or more electromagnets 460 are actuated or energized. As described above, in response to determining by the controller 356 that the rotational speed of the gearbox shaft 360 is near, has reached, and/or has exceeded a rotational speed threshold, the controller 356 may cause one or more of the capacitors 480 to discharge their stored electrical energy to the one or more electromagnets 460. Energizing of the one or more electromagnets 460 causes the one or more interface elements 440 to move from the extended position 504 (FIGS. 4A and 5A) to the retracted position 502 (FIGS. 4B and 5B) such that the generator shaft 362 is disengaged from the gearbox shaft 360.

At 708, the method 700 includes engaging the locking mechanism 500 to secure or maintain the one or more interface elements 440 in the retracted position 502 (FIGS. 4B and 5B). It should be understood that, in exemplary embodiments, the locking mechanism 500 may be omitted or its use delayed. In such a scenario, by way of non-limiting example, the one or more electromagnets 460 may remain energized for a defined or variable period of time to maintain the one or more interface elements 440 in the retracted position 502 (FIGS. 4B and 5B). In an embodiment where the one or more locking mechanisms 500 are actuated to maintain the one or more interface elements 440 in the retracted position 502 (FIGS. 4B and 5B), at 710, the method 700 includes de-actuating or de-energizing the one or more electromagnets 460. Thus, it should be understood that 708 and 710 may be optional.

At 712, the method 700 includes a determination to re-connect the generator shaft 362 with the gearbox shaft 360. At 714, the method 700 includes determining a rotational speed of the gearbox shaft 360 (e.g., via the controller 356). At 716, the method 700 includes synchronizing a rotational speed of the generator shaft 362 with the gearbox shaft 360. By way of non-limiting example, the controller 356 may control the electric machine 354 (FIG. 3) to control a rotational speed of the generator shaft 362 to be synchronized with a rotational speed of the gearbox shaft 360. At 718, the method 700 includes de-actuating the one or more locking mechanisms 500 to enable the one or more interface elements 440 to move to the extended position 504 (FIGS. 4A and 5A) and reengage the generator shaft 362. As described above, if the one or more locking mechanisms 500 are omitted or not utilized, the one or more electromagnets 460 may be de-energized to enable the one or more interface elements 440 to move to the extended position 504 (FIGS. 4A and 5A) and reengage the generator shaft 362.

FIG. 9 provides an example computing system 800 according to example embodiments of the present disclosure. The computing devices or elements described herein, such as the controllers 182 and 356, may include various components and perform various functions of the computing system 800 described below, for example.

As shown in FIG. 9, the computing system 800 can include one or more computing device(s) 802. The computing device(s) 802 can include one or more processor(s) 802A and one or more memory device(s) 802B. The one or more processor(s) 802A can include any suitable processing device, such as a microprocessor, microcontroller, integrated circuit, logic device, and/or other suitable processing device. The one or more memory device(s) 802B can include one or more computer-executable or computer-readable media, including, but not limited to, non-transitory computer-readable media, RAM, ROM, hard drives, flash drives, and/or other memory devices.

The one or more memory device(s) 802B can store information accessible by the one or more processor(s) 802A, including computer-readable instructions 802C that can be executed by the one or more processor(s) 802A. The instructions 802C can be any set of instructions that when executed by the one or more processor(s) 802A, cause the one or more processor(s) 402A to perform operations. In some embodiments, the instructions 402C can be executed by the one or more processor(s) 8402A to cause the one or more processor(s) 802A to perform operations, such as any of the operations and functions for which the computing system 800 and/or the computing device(s) 802 are configured, such as actuating or energizing the one or more electromagnets 460, de-actuating or de-energizing energizing the one or more electromagnets 460, actuating and/or de-actuating the one or more locking mechanisms 500, monitoring a rotational speed of the gearbox shaft 360, and monitoring and/or controlling a rotational speed of the generator shaft 362. The instructions 802C can be software written in any suitable programming language or can be implemented in hardware. Additionally, and/or alternatively, the instructions 802C can be executed in logically and/or virtually separate threads on processor(s) 802A. The memory device(s) 802B can further store data 802D that can be accessed by the processor(s) 802A. For example, the data 802D can include models, lookup tables, databases, etc.

The computing device(s) 802 can also include a network interface 802E used to communicate, for example, with the other components of the computing system 800 (e.g., via a communication network). The network interface 802E can include any suitable components for interfacing with one or more network(s), including for example, transmitters, receivers, ports, controllers, antennas, and/or other suitable components. One or more devices can be configured to receive one or more commands from the computing device(s) 802 or provide one or more commands to the computing device(s) 802.

Thus, embodiments of the present disclosure provide a shaft disconnection system that may be reset and used for repeated connection and disconnection of torque-based devices. In exemplary embodiments, the shaft disconnection system is self-powered and/or self-actuating based on electrical energy generated via one or more rotating shafts of the torque-producing devices. In exemplary embodiments, the shaft disconnection system requires no axial movement of one shaft with respect to another shaft to engage or disengage the respective shafts, therefore resulting in less required space. Further, in exemplary embodiments, the shaft disconnection system of the present disclosure is not reliant on an independent or separate power source apart from the connected torque-based devices.

Although specific features of various embodiments may be shown in some drawings and not in others, this is for convenience only. In accordance with the principles of the present disclosure, any feature of a drawing may be referenced and/or claimed in combination with any feature of any other drawing.

Further aspects of the disclosure are provided by the subject matter of the following clauses:
A shaft disconnection system, comprising: a first shaft interconnected with a gearbox; a second shaft interconnected with an electric machine; an interface element movable from a first position in which the first and second shafts are engaged with respect to each other to a second position in which the first and second shafts are disengaged with respect to each other, wherein the interface element transfers torque between the first and second shafts when located in the first position; and an electromagnet positioned radially outward of the first and second shafts and axially aligned with the interface element; and wherein actuation of the electromagnet causes the interface element to move from the first position to the second position.

The shaft disconnection system of the previous clause, wherein the interface element is biased toward the first position.

The shaft disconnection system of any previous clause, further comprising a biasing member coupled to the interface element biasing the interface element toward the first position.

The shaft disconnection system of any previous clause, wherein the second shaft is coaxial with the first shaft.

The shaft disconnection system of any previous clause, further comprising: at least one spring having a first end coupled to the interface element and a second end coupled to at least one of the first and second shafts.

The shaft disconnection system of any previous clause, wherein the first and second shafts are arranged in an overlapping relationship.

The shaft disconnection system of any previous clause, wherein the first shaft comprises a hollow portion, and wherein at least a portion of the second shaft is positioned within the hollow portion of the first shaft.

The shaft disconnection system of any previous clause, wherein: the first shaft comprises a first detent; and the second shaft comprises a second detent; and wherein the interface element is positionable within the first detent and the second detent to move between the first position and the second position.

The shaft disconnection system of any previous clause, wherein the first detent is positioned on a radially inward surface of the first shaft.

The shaft disconnection system of any previous clause, wherein the second detent is positioned on a radially outward surface of the second shaft.

The shaft disconnection system of any previous clause, further comprising at least one biasing member having a first end coupled to the interface element and a second end coupled to the first detent.

The shaft disconnection system of any previous clause, further comprising at least one locking mechanism positioned to retain the interface element in the second position.

The shaft disconnection system of any previous clause, further comprising: at least one biasing member having a first end coupled to the interface element and a second end coupled to at least one of the first and second shafts, the at least one biasing member biasing the interface element toward the first position; and at least one locking mechanism positioned to retain the interface element in the second position.

The shaft disconnection system of any previous clause, further comprising: a magnet positioned on at least one of the first and second shafts; a coil positioned radially outward of the magnet; and a capacitor electrically coupled to the coil.

The shaft disconnection system of any previous clause, wherein the capacitor is electrically coupled to the electromagnet.

The shaft disconnection system of any previous clause, further comprising a capacitor electrically coupled to the electromagnet.

The shaft disconnection system of any previous clause, further comprising a controller configured to control actuation of the electromagnet.

The shaft disconnection system of any previous clause, wherein the interface element is at least partially spherical, cylindrical, elliptical, or wedged in shape.

The shaft disconnection system of any previous clause, further comprising a controller configured to actuate the electromagnet based on a rotational speed of at least one of the first and second shafts.

The shaft disconnection system of any previous clause, further comprising: a magnet positioned on at least one of the first and second shafts; a coil positioned radially outward of the magnet; a capacitor electrically coupled to the coil, the capacitor configured to store electrical energy generated by a rotation of the magnet with respect to the coil; and a controller configured to control actuation of the electromagnet based on a level of the electrical energy stored by the capacitor.

The shaft disconnection system of any previous clause, further comprising a controller configured to synchronize a rotational speed of the first and second shafts before causing the interface element to move from the second position to the first position, the rotational speed being a positive number.

The shaft disconnection system of any previous clause, wherein the interface element comprises a plurality of interface elements spaced circumferentially about the first and second shafts.

The shaft disconnection system of any previous clause, wherein the electric machine comprises a motor/generator.

A shaft disconnection system, comprising: a first shaft interconnected with a gearbox; a second shaft interconnected with an electric machine, the second shaft coaxial with the first shaft; an interface element movable from a first position in which the first and second shafts are engaged with respect to each other to a second position in which the first and second shafts are disengaged with respect to each other, wherein the interface element transfers torque between the first and second shafts when located in the first position; an electromagnet actuatable to move the interface element from the first position to the second position; a magnet positioned on at least one of the first and second shafts; and a coils positioned radially outward of the magnet and axially aligned with the magnet, the coil electrically coupled to the electromagnet.

The shaft disconnection system of any previous clause, further comprising a capacitor electrically coupled to the coil and the electromagnet.

The shaft disconnection system of any previous clause, wherein the capacitor receives and stores electrical energy generated by a rotation of the magnet with respect to the coil.

The shaft disconnection system of any previous clause, further comprising a controller configured to actuate the electromagnet using electrical energy created by a rotation of the magnet with respect to the coil.

A shaft disconnection system, comprising: a first shaft interconnected with a gearbox; a second shaft interconnected with an electric machine, the second shaft coaxial with the first shaft; an interface element movable from a first position in which the first and second shafts are engaged with respect to each other to a second position in which the first and second shafts are disengaged with respect to each other, wherein the interface element transfers torque between the first and second shafts when located in the first position; an electromagnet actuatable to move the interface element from the first position to the second position; and a capacitor electrically coupled to the electromagnet, the capacitor controllable to deliver electrical energy stored by the capacitor to the electromagnet.

The shaft disconnection system of any previous clause, wherein the capacitor comprises a supercapacitor.

The shaft disconnection system of any previous clause, further comprising a coil disposed radially outward of at least one of the first and second shafts, and wherein the capacitor is electrically coupled to the coil.

The shaft disconnection system of any previous clause, further comprising a magnet positioned on the least one of the first and second shafts.

The shaft disconnection system of any previous clause, wherein the capacitor receives the electrical energy from a wireless power source.

A shaft disconnection system, comprising: a first shaft interconnected with a gearbox; a second shaft interconnected with an electric machine, the second shaft coaxial with the first shaft; an interface element movable from a first position in which the first and second shafts are engaged with respect to each other to a second position in which the first and second shafts are disengaged with respect to each other, wherein the interface element transfers torque between the first and second shafts when located in the first position; and a controller configured to control the electric machine to synchronize a rotational speed of the first and second shafts before causing the interface element to move from the second position to the first position, the rotational speed being a positive number.

The shaft disconnection system of any previous clause, wherein the controller is configured to increase a rotational speed of the second shaft to at or near a rotational speed of the first shaft before causing the interface element to move from the second position to the first position.

A shaft disconnection system, comprising: a first shaft interconnected with a gearbox; a second shaft interconnected with an electric machine, the second shaft coaxial with the first shaft; an interface element movable from a first position in which the first and second shafts are engaged with respect to each other to a second position in which the first and second shafts are disengaged with respect to each other, wherein the interface element transfers torque between the first and second shafts when located in the first position; and an electromagnet actuatable to move the interface element from the first position to the second position; and a controller configured to actuate the electromagnet based on a rotational speed of the second shaft exceeding a threshold.

The shaft disconnection system of any previous clause, further comprising a capacitor electrically coupled to the electromagnet, and wherein the controller is configured to actuate the electromagnet based on a level of electrical energy stored by the capacitor exceeding a threshold.

A method for disconnecting shafts, the method comprising: rotationally driving a first shaft, the first shaft engaged with a second shaft via an interface element, the interface element transferring torque between the first and second shafts, and wherein an electromagnet is disposed radially outward of the interface element; and energizing the electromagnet to cause the interface element to disengage from the second shaft.

The method of any previous clause, further comprising: determining a rotational speed of at least one of the first shaft or the second shaft; and responsive to the rotational speed nearing, meeting, or exceeding a threshold, energizing the electromagnet.

The method of any previous clause, wherein the interface element is movable from a first position in which the first and second shafts are engaged with respect to each other to a second position in which the first and second shafts are disengaged with respect to each other, the method further comprising maintaining the interface element in the second position via a locking mechanism.

The method of any previous clause, wherein the interface element is movable from a first position in which the first and second shafts are engaged with respect to each other to a second position in which the first and second shafts are disengaged with respect to each other, the method further comprising: de-energizing the electromagnet; and maintaining the interface element in the second position after the de-energizing of the electromagnet.

The method of any previous clause, further comprising energizing the electromagnet via electrical energy stored by a capacitor.

The method of any previous clause, further comprising generating the electrical energy via a magnet located on at least one of the first and second shafts and a coil located radially outward from the magnets.

The method of any previous clause, further comprising re-connecting the first shaft and the second shaft.

The method of any previous clause, wherein re-connecting the first shaft and the second shaft comprises: synchronizing a rotational speed of the first and second shafts, the rotational speed being a positive number; and re-engaging the interface element with the second shaft.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

While this disclosure has been described as having exemplary designs, the present disclosure can be further modified within the scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A shaft disconnection system (400), comprising:
a first shaft (360) interconnected with a gearbox (352);
a second shaft (362) interconnected with an electric machine (354);
an interface element (440) movable from a first position in which the first and second shafts (360, 362) are engaged with respect to each other to a second position in which the first and second shafts (360, 362) are disengaged with respect to each other, wherein the interface element (440) transfers torque between the first and second shafts (360, 362) when located in the first position; and
an electromagnet (460) positioned radially outward of the first and second shafts (360, 362) and axially aligned with the interface element (440); and
wherein actuation of the electromagnet (460) causes the interface element (440) to move from the first position to the second position.

2. The shaft disconnection system (400) of claim 1, wherein the interface element (440) is biased toward the first position.

3. The shaft disconnection system (400) of claim 1 or 2, wherein:
the first shaft (360) comprises a first detent (420); and
the second shaft (362) comprises a second detent (430); and
wherein the interface element (440) is positionable within the first detent (420) and the second detent (430) to move between the first position and the second position.

4. The shaft disconnection system (400) of claim 3, wherein the first detent (420) is positioned on a radially inward surface of the first shaft (360), and the second detent (430) is positioned on a radially outward surface of the second shaft (362).

5. The shaft disconnection system (400) of any preceding claim, further comprising at least one locking mechanism (500) positioned to retain the interface element (440) in the second position.

6. The shaft disconnection system (400) of any preceding claim, further comprising:
a magnet (470) positioned on at least one of the first and second shafts (360, 362);
a coil (472) positioned radially outward of the magnet (470); and
a capacitor (480) electrically coupled to the coil (472).

7. The shaft disconnection system (400) of claim 6, wherein the capacitor (480) is electrically coupled to the electromagnet (460).

8. The shaft disconnection system (400) of any preceding claim, further comprising a controller (356) configured to control actuation of the electromagnet (460).

9. The shaft disconnection system (400) of claim 8, wherein the controller (356) is configured to actuate the electromagnet (460) based on a rotational speed of at least one of the first or second shafts (360, 362).

10. The shaft disconnection system (400) of any preceding claim, further comprising a controller (356) configured to synchronize a rotational speed of the first and second shafts (360, 362) before causing the interface element (440) to move from the second position to the first position, the rotational speed being a positive number.

11. A method for disconnecting shafts, the method comprising:
rotationally driving a first shaft (360), the first shaft (360) engaged with a second shaft (362) via an interface element (440), the interface element (440) transferring torque between the first and second shafts (360, 362), and wherein an electromagnet (460) is disposed radially outward from and axially aligned with the interface element (440); and
energizing the electromagnet (460) to cause the interface element (440) to disengage from the second shaft (362).

12. The method of claim 11, further comprising:
determining a rotational speed of at least one of the first shaft (360) or the second shaft (362); and
responsive to the rotational speed nearing, meeting, or exceeding a threshold, energizing the electromagnet (460).

13. The method of claim 11 or 12, wherein the interface element (440) is movable from a first position in which the first and second shafts (360, 362) are engaged with respect to each other to a second position in which the first and second shafts (360, 362) are disengaged with respect to each other, the method further comprising maintaining the interface element (440) in the second position via a locking mechanism (500).

14. The method of any of claims 11 to 13, further comprising energizing the electromagnet (460) via electrical energy stored by a capacitor (480).

15. The method of claim 14, further comprising generating the electrical energy via a magnet (470) located on at least one of the first and second shafts (360, 362) and a coil (472) located radially outward from the magnet (470).
